# EUROPEAN PATENT APPLICATION

(11) **EP 2 633 754 A2**
(43) Date of publication of application: **04.09.2013**
(21) Application number: 12195211.3
(22) Date of filing: 03.12.2012
(51) Int. Cl.: A01G 25/09

(54) **Safety monitor for an irrigation system and methods**

(30) Priority: 29.02.2012 US 201213408753
(71) Applicant: Lindsay Corporation, Omaha, NE 68164 (US)
(72) Inventor: Pfrenger, Jochen, Omaha, Nebraska 68164 (US); Miller, Mark William, Omaha, Nebraska 68164 (US); Grabow, John Paul, Omaha, Nebraska 68164 (US); Lawson, Christopher Thomas, Omaha, Nebraska 68164 (US)
(74) Representative: UEXKÜLL & STOLBERG

(57) **Abstract**

A method of operating a center pivot irrigation system (10) having a main boom assembly (14) with an end tower (26) and an extension arm (16) pivotally supported to the end tower (26). The method determines an actual position of the end tower (26) while the irrigation system is in operation; determines an actual angular orientation of the extension arm (16) relative to the end tower (26); accesses memory and determines the desired angular orientation of the extension arm (16); and compares the actual angular orientation to the desired angular orientation. If the actual angular orientation deviates from the desired angular orientation by more than a threshold amount, the method shuts down the irrigation system.

## Description

### BACKGROUND OF THE INVENTION

### 1. FIELD OF THE INVENTION

The present invention relates to agricultural irrigation systems. More particularly, the invention relates to an improved safety monitor for monitoring the position and orientation of an irrigation system and for shutting down the irrigation system when it is off course and/or misaligned.

### 2. BACKGROUND

Center pivot irrigation systems typically include a fixed center pivot connected to a pressurized water supply and a main boom assembly pivotally connected to the center pivot. The main boom assembly may comprise a series of moveable support towers connected to one another by truss sections; a water distribution conduit supported by the truss sections; and a number of sprinkler heads, spray guns, drop nozzles, or other fluid emitting devices spaced along the length of the conduit. The support towers are supported on wheels that are driven at slow speeds to move the towers in a generally circular path about the center pivot to irrigate a large tract of land.

Because center pivot irrigation systems move in a generally circular path, their main boom assemblies cannot effectively irrigate the corners of a rectangular or square shaped field. These systems therefore often include an extension arm or swing arm pivotally connected to the end tower of the main boom. The extension arm may be supported by a swing tower which has steerable wheels driven by a motor. The extension arm is initially folded in relative to the end tower and may be pivoted outwardly while irrigating the corners of a field or other areas outside the reach of the main boom assembly.

Lateral move irrigation system also include a series of moveable support towers connected by truss sections, but the support towers are not connected to a fixed center pivot, but instead move in general alignment across a rectangular-shaped field. Some lateral move irrigation systems also include extension arms for irrigating hard to reach areas in a field.

The support towers of both center pivot and lateral move irrigation systems must stay in general alignment for safe operation. When the towers become misaligned, the joints between the towers and the truss sections can be damaged. Similarly, the mobile towers and extension arms must stay within a certain distance of a desired path to prevent collisions with trees, fences, buildings, and other obstacles near a field boundary.

Many different safety monitors have been developed for monitoring the position and orientations of irrigation systems. One such system is designed for center pivot irrigation systems and uses an electromagnetically charged cable buried in the ground along a desired path for the extension arm. An antenna is positioned on the extension arm for detecting the electromagnetic field of the cable, and a control system steers the wheels of the extension arm to follow the buried cable and to shut down the irrigation system if it goes too far off course. Unfortunately, the installation of such buried cables is time consuming and expensive, especially in rocky or other difficult soil. Buried cables are also prone to shifting and/or damage caused by rodents, shifting soil, lightning, tillage, and other farm practices. It is also very expensive to repair or to alter the path of these systems once the cable is buried.

Other safety monitors use analog switches to monitor when the mobile towers drift off-course and/or become misaligned. Unfortunately, these switches require frequent adjustment and calibration and often break.

Accordingly, there is a need for an improved safety monitor for monitoring the position or orientation of an irrigation system.

### SUMMARY OF THE INVENTION

The present invention solves the above-described problems and provides a distinct advance in the art of safety monitors for irrigation systems. More particularly, an embodiment of the present invention provides an improved safety monitor for accurately and consistently monitoring the positioning and/or alignment of an irrigation system without the use of buried cables or faulty analog switches. The safety monitor also shuts down the irrigation system if it become misaligned and/or travels too far off course.

One embodiment of the invention is a method of operating an irrigation system having a main boom assembly with an end tower and an extension arm pivotally supported to the end tower. The method broadly comprises determining at least some boundaries of a field to be irrigated; determining a plurality of positions for the end tower along a generally circular or semi-circular path in the field; determining a desired angular orientation of the extension arm relative to the end tower for each of the positions of the end tower along the path based at least partially on the boundaries; and storing in memory a look-up table having data representative of the desired angular orientations of the extension arm associated with data representative of the positions of the end tower along the path. The method further comprises determining an actual position of the end tower in the field while the center pivot irrigation system is in operation; determining an actual angular orientation of the extension arm relative to the end tower; accessing the memory and determining the desired angular orientation of the extension arm for the actual position of the end tower; and comparing the actual angular orientation of the extension arm to the desired angular orientation. If the actual angular orientation deviates from the desired angular orientation by more than a threshold amount, the method partially or wholly shuts down the irrigation system. In particular embodiments of the method, the actual position of the end tower is determined with a GPS receiver mounted to the end tower, and the actual angular orientation of the extension arm is determined with an angular encoder mounted between the extension arm and the end tower.

Another embodiment of the invention is an irrigation system broadly comprising a stationary center pivot connected to a source of fluid; a main boom assembly pivotally connected to the center pivot; and an extension arm pivotally supported to an end tower of the main boom assembly. The main boom has a plurality of boom sections supported by moveable towers, the moveable tower furthest from the center pivot being the end tower. The irrigation system also includes a control system for controlling the positioning of the extension arm. The control system includes a location-determining component for determining a current location of the end tower; an angular measurement device coupled between the extension arm and the end tower for measuring an angular orientation of the extension arm relative to the end tower; and a controller coupled with the location-determining component and the angular measurement device. The controller is operable to receive from the location-determining component an actual position of the end tower in the field while the center pivot irrigation system is in operation; receive from the angular measurement device an actual angular orientation of the extension arm relative to the end tower while the center pivot irrigation system is in operation; access memory in which is stored a desired angular orientation for the extension arm for each position of the end tower in the field based at least partially on the boundaries of the extension arm; select from the memory a desired angular orientation of the extension arm based on the actual position of the end tower; compare the actual angular orientation of the extension arm to the desired angular orientation of the extension arm; and if the actual angular orientation of the extension arm deviates from the desired angular orientation by more than a threshold amount, direct a steering mechanism to steer the extension arm toward the desired angular orientation. The irrigation system also includes an independent safety monitor that partially or wholly shuts down the irrigation system if the actual angular orientation of the extension arm deviates from the desired angular orientation by more than a second threshold amount that is greater than the first threshold amount.

This summary is provided to introduce a selection of concepts in a simplified form that are further described below in the detailed description. This summary is not intended to identify key features or essential features of the claimed subject matter, nor is it intended to be used to limit the scope of the claimed subject matter. Other aspects and advantages ofthe present technology will be apparent from the following detailed description of the embodiments and the accompanying drawing figures.

These and other important aspects of the present invention are described more fully in the detailed description below.

### BRIEF DESCRIPTION OF THE DRAWING FIGURES

A preferred embodiment of the present invention is described in detail below with reference to the attached drawing figures, wherein:
Fig. 1 is a schematic plan view of a center pivot irrigation system illustrating certain principles of embodiments of the present invention;
Fig. 2 is another schematic plan view of the irrigation system;
Fig. 3 is a block diagram of an extension arm control system which may be used to implement certain aspects of the present invention;
Fig. 4 is a partial look-up table that may be used with the extension arm control system of Fig. 3;
Fig. 5 is a flow diagram of an exemplary method of the invention.
Fig. 6 is a schematic plan view of a center pivot irrigation system illustrating certain principles of embodiments of the present invention;
Fig. 7 is another schematic plan view of the irrigation system;
Fig. 8 is another schematic plan view of the irrigation system;
Fig. 9 is another schematic plan view of the irrigation system;
Fig. 10 is a block diagram of a safety monitor which may be used to implement certain aspects of the present invention;
Fig. 11 is a partial look-up table that may be used with the safety monitor of Fig. 10;
Fig. 12 is a flow diagram of an exemplary method of using the safety monitor.

The drawing figures do not limit the present invention to the specific embodiments disclosed and described herein. The drawings are not necessarily to scale, emphasis instead being placed upon clearly illustrating the principles of the invention.

### DETAILED DESCRIPTION OF THE PREFERRED EMBODIMENTS

The following detailed description of embodiments of the invention references the accompanying drawings. The embodiments are intended to describe aspects of the invention in sufficient detail to enable those skilled in the art to practice the invention. Other embodiments can be utilized and changes can be made without departing from the scope of the claims. The following detailed description is, therefore, not to be taken in a limiting sense. The scope of the present invention is defined only by the appended claims, along with the full scope of equivalents to which such claims are entitled.

In this description, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments, but is not necessarily included. Thus, the present technology can include a variety of combinations and/or integrations of the embodiments described herein.

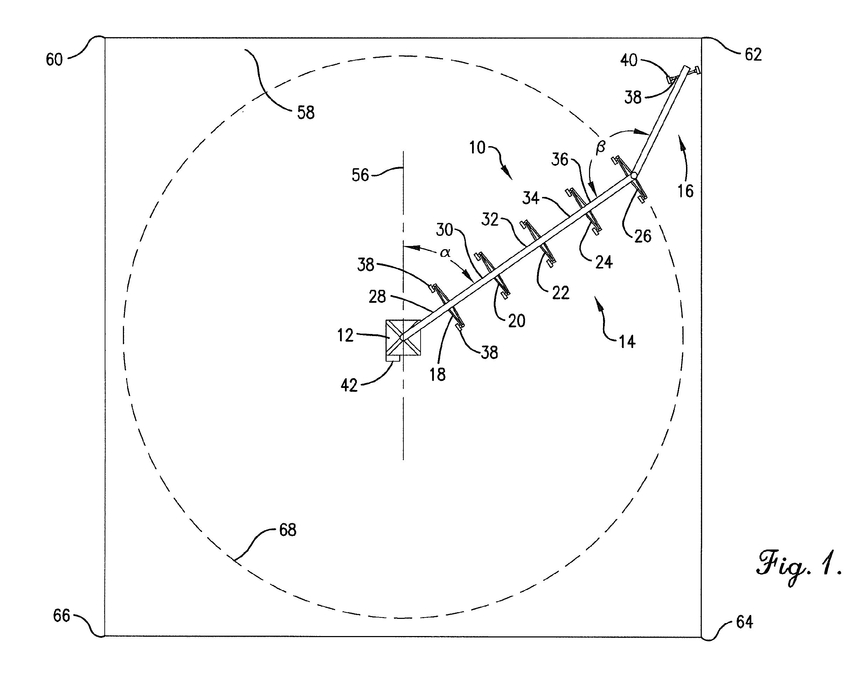

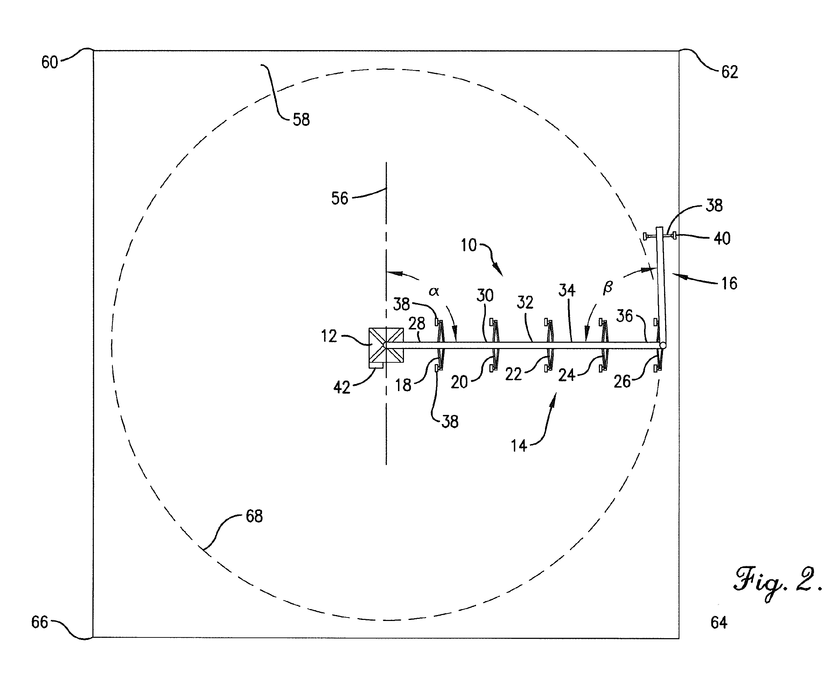

Turning now to the drawing figures, and initially Figs. 1 and 2, an exemplary center pivot irrigation system 10 constructed in accordance with embodiments of the invention is illustrated. The center pivot irrigation system 10 broadly comprises a fixed center pivot 12, a main boom assembly 14 pivotally connected to the center pivot 12, and an extension arm 16 (also commonly referred to as a "swing arm" or "corner arm") pivotally connected to the free end of the main boom assembly 14.

The fixed center pivot 12 may be a tower or any other support structure about which the main boom assembly 14 may pivot. The center pivot 12 has access to a well, water tank, or other source of water and may also be coupled with a tank or other source of agricultural products to inject fertilizers, pesticides and/or other chemicals into the water for application during irrigation.

The main boom assembly 14 may comprise a number of moveable support towers 18, 20, 22, 24, 26, the outermost of which is referred to herein as an end tower. The support towers are connected to the fixed center pivot 12 and to one another by truss sections or other supports 28, 30, 32, 34, 36. The mobile towers 18-26 have wheels 38 driven by suitable drive motors. Although not required, some or all of the towers 18-26 may be equipped with steerable wheels pivoted about upright axes by suitable steering motors so that the towers can follow a predetermined track. U.S. Patent 4,508,269 in the name of Davis et al. is hereby incorporated by reference in its entirety into the present specification for a disclosure of ground drive motors and steering motors associated with an irrigation machine. As is also well known, the drive motors for the towers 18-26 are controlled by a suitable safety system such that they may be slowed or completely shut down in the event of the detection of an adverse circumstance, all of which is disclosed, for example, in U.S. Patent 6,042,031 to Christensen, et al. incorporated herein by reference in its entirety.

Each of the truss sections or supports 28-36 carries or otherwise supports a conduit section or other fluid distribution mechanism that is connected in fluid communication with all other conduit sections of the system. A plurality of sprinkler heads, spray guns, drop nozzles, or other fluid-emitting devices are spaced along the conduit sections to apply water and/or other fluids to land underneath the irrigation system.

The extension arm 16 is pivotally connected to the end tower 26 and may be supported by a swing tower 38 with steerable wheels 40 driven by a motor. As described in more detail below, the extension arm 16 is folded in relative to the end tower 26 when it is not irrigating a corner of a field and may be pivoted outwardly away from the end tower while irrigating the corners of a field.

The extension arm 16 may be joined to the end tower 26 by an articulating pivot joint. The joint allows the extension arm 16 to articulate or bend relative to the end tower 26 to irrigate the corners of a field or other areas which could not be reached without the articulating pivot joint. The articulating pivot joint is preferably a Zimmatic™ FieldPLUS Articulated Pivot™ provided by Lindsay™ Manufacturing Company, but may be any other pivot joint that permits the same articulating movement.

The center pivot irrigation system 10 may also include one or more high pressure sprayers or end guns mounted to the end tower 26 or to the end of the extension arm 16. The end guns are activated at the corners of a field or other designated areas to increase the amount of land that can be irrigated. Booster pumps may be coupled with the end guns to increase their range.

The center pivot irrigation system 10 also includes a main control system 42 for controlling movement of the mobile towers 18-26 and for controlling operation of the fluid-emitting devices in accordance with a custom irrigation design program as described in more detail below. The main control system 42 may include a processor or other computing device with inputs that receive positional information from one or more GPS receivers mounted to the end tower 26 or elsewhere. The processor inputs may also receive information from angle encoders mounted between the center pivot 12 and a first span of the main boom assembly 14. The processor may also include outputs connected to relay-controlled valves connected to the water-emitting devices and relay-controlled electric motors connected to the drive wheels of the mobile towers. As explained in more detail below, the processor may control movement of the mobile towers and operation of the water-emitting devices in accordance with a custom irrigation program in a generally conventional manner.

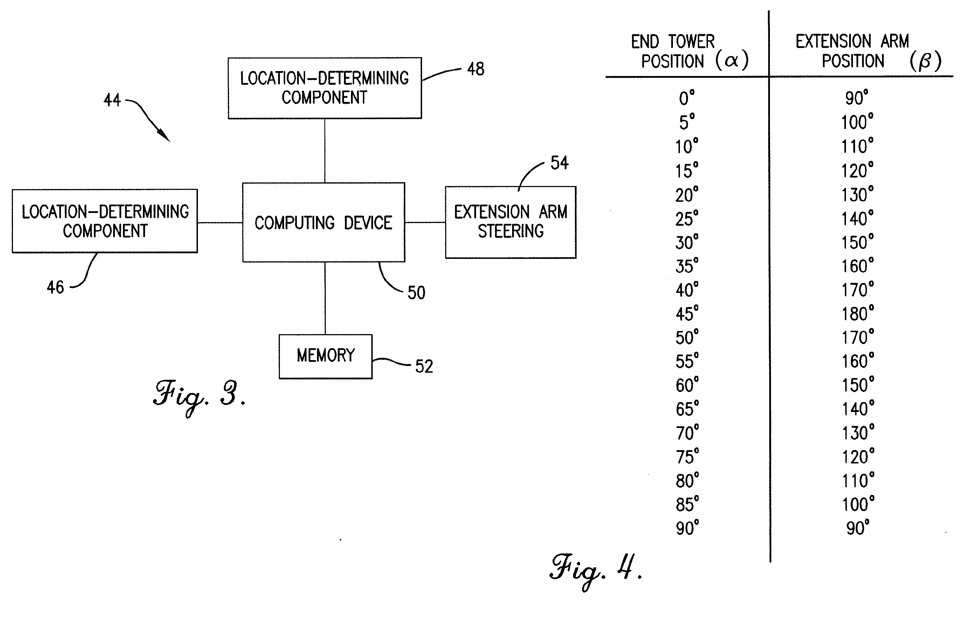

The center pivot irrigation system 10 also includes an extension arm control system 44 illustrated in Fig. 3 for driving and controlling the positioning ofthe extension arm 16. The extension arm control system 44 can be implemented with hardware, software, firmware, or a combination thereof, and in one embodiment comprises a location determining component 46, a location determining component 48, a computing device 50, memory 52, and a swing arm steering mechanism 54. Some or all of the functionality of the extension arm control system 44 may be performed by the main control system 42 so that the extension arm control features of the present invention can be implemented without dedicated electronics.

The location determining component 46 provides, in a substantially conventional manner, location or positional information for the end tower 26. The location determining component may be, for example, an angle encoder positioned between the fixed center pivot 12 and the main boom assembly 14 for sensing an angle ∝ between the main boom assembly and an axis line 56. In some embodiments, the angle encoder is incorporated in an existing articulating joint positioned between the center pivot 12 and the first span of the main boom assembly 14 so that the extension arm control system does not require its own dedicated angle encoder.

The location determining component 46 may also be a GPS receiver attached to or near the end tower 26 and operable to receive navigational signals from GPS satellites to calculate a position of the end tower as a function of the signals. The GPS receiver may include one or more processors, controllers, or other computing devices and memory for storing information accessed and/or generated by the processors or other computing devices. In some embodiments, the GPS receiver is the same GPS receiver that is used by the main control system 42 to control the positioning and/or operation of the main boom assembly so that the extension arm control system 44 does not require its own dedicated GPS receiver. The GPS receiver may be coupled with a GPS patch antenna, helical antenna, or any other type of antenna mounted on or near the end tower.

The location determining component 46 may also be any other receiving device capable of receiving location information from at least three transmitting locations and performing basic triangulation calculations to determine the relative position of the receiving device with respect to the transmitting locations. For example, cellular towers or any customized transmitting radio frequency towers can be used instead of satellites. With such a configuration, any standard geometric triangulation algorithm can be used to determine the exact location of the receiving unit.

The location determining component 48 provides, in a substantially conventional manner, location or positional information for the extension arm 16. In one embodiment, the location determining component 48 is an angle encoder coupled between the extension arm 16 and the end tower 26. The location determining component 48 may also be any other device capable of measuring or otherwise determining the angular orientation of the extension arm 16 relative to the end tower 26. In some embodiments, the angle encoder or other angle measuring device is part of the above-described articulating pivot joint so that the extension arm control system 44 does not require a dedicated angle encoder. In other embodiments, the location determining component 48 may be a GPS receiver mounted to the swing tower 38 of the extension arm 16.

The computing device 50 receives data from the location determining components 46 and 48, determines a desired position of the extension arm 16 as a function of the data, calculates a steering signal, and provides the steering signal to the swing arm steering mechanism 54 if the extension arm 16 requires steering. The computing device 50 may include any number of processors, controllers, ASICs, or other control circuitry. As mentioned above, the computing device 50 may be part of the main control system 42 so that separate dedicated electronic circuitry is not required to control the positioning of the extension arm 16.

A computer program that may be implemented by the computing device 50 may perform some of the control functions described herein. The computer program preferably comprises an ordered listing of executable instructions for implementing logical functions in the computing device. The computer program can be embodied in any computer-readable medium for use by or in connection with an instruction execution system, apparatus, or device, such as a computer-based system, processor-containing system, or other system that can fetch the instructions from the instruction execution system, apparatus, or device, and execute the instructions. In the context of this application, a "computer-readable medium" can be any means that can contain, store, communicate, propagate or transport the program for use by or in connection with the instruction execution system, apparatus, or device. The computer-readable medium can be, for example, but not limited to, an electronic, magnetic, optical, electro-magnetic, infrared, or semi-conductor system, apparatus, device, or propagation medium. More specific, although not inclusive, examples of the computer-readable medium would include the following: an electrical connection having one or more wires, a portable computer diskette, a random access memory (RAM), a read-only memory (ROM), an erasable, programmable, read-only memory (EPROM or Flash memory), an optical fiber, and a portable compact disk read-only memory (CDROM).

The memory 52 may be any electronic memory that can be accessed by the computing device 50 and operable for storing instructions or data. The memory 52 may be integral with the computing device 50 or may be external memory accessible by the computing device. The memory 52 may be a single component or may be a combination of components that provide the requisite functionality. The memory may include various types of volatile or non-volatile memory such as flash memory, optical discs, magnetic storage devices, SRAM, DRAM, or other memory devices capable of storing data and instructions. The memory may communicate directly with the computing device or may communicate over a bus or other mechanism that facilitates direct or indirect communication. The memory may optionally be structured with a file system to provide organized access to data existing thereon.

In accordance with one important aspect of the invention, the memory 52 may store data representative of a plurality of positions of the end tower 26 along a generally circular or semi-circular path of travel and data representative of desired positions of the extension arm 16 for the positions of the end tower 26. The data may be in various forms and gathered in various manners, examples of which are described in more detail below.

The swing arm steering mechanism 54 is conventional and may be any known control system operable to receive instructions from the computing device 50 and to steer the extension arm 16 in response to these instructions.

The extension arm control system 44 may also include a power source such as a battery pack or solar cell, or it may be hardwired to a power source associated with other components of the center pivot irrigation system. The extension arm control system 48 may also include a display, a cellular or other radio transceiver for wirelessly receiving and transmitting data from and to remote devices, and/or other components.

The components shown in Fig. 3 and described above need not be physically connected to one another since wireless communication among the various depicted components is permissible and intended to fall within the scope of the present invention. Some or all of the components of the extension arm control system 44 may be enclosed in or supported on a weatherproof housing for protection from moisture, vibration, and impact. The housing may be constructed from a suitable vibration- and impact-resistant material such as, for example, plastic, nylon, aluminum, or any combination thereof and may include one or more appropriate gaskets or seals to make it substantially waterproof or resistant. The housing may include a location for a battery, or other power source.

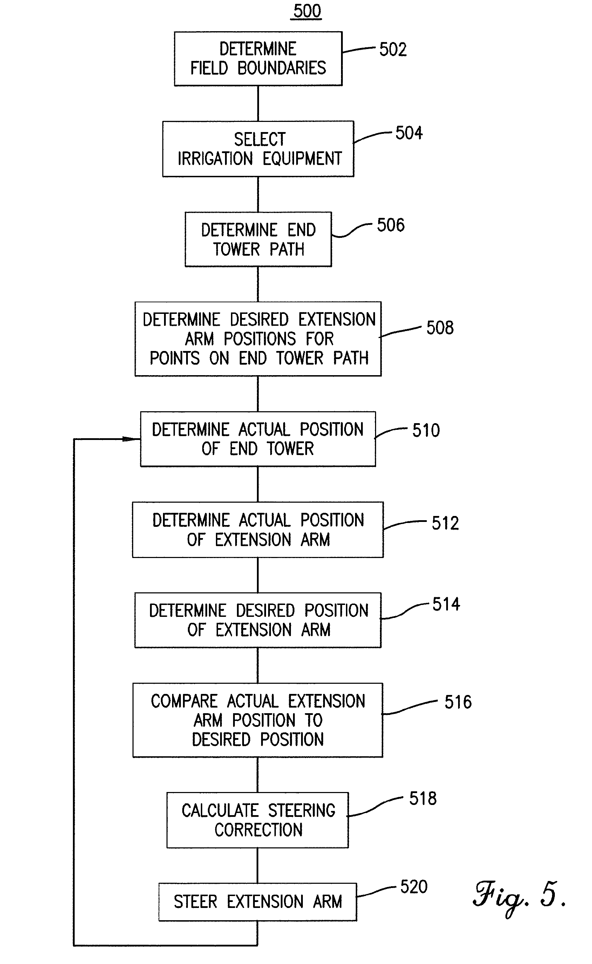

The flow chart of Fig. 5 depicts exemplary steps in a method 500 of selecting, setting-up, and operating the center pivot irrigation system 10. Some of the blocks of the flow chart may represent a module segment or portion of code of the computer programs of the present invention which comprise one or more executable instructions for implementing the specified logical function or functions. In some alternative implementations, the functions noted in the various blocks may occur out of the order depicted in Fig. 5. For example, two blocks shown in succession in Fig. 5 may in fact be executed substantially concurrently, or the blocks may sometimes be executed in the reverse order depending upon the functionality involved.

Figs. 1 and 2 illustrate an exemplary field 58 in which the center pivot irrigation system 10 may be used. The illustrated field is rectangular, but the principles of the present invention work equally well with any sized and shaped field or other area to be irrigated. The illustrated field has four corners 60, 62, 64, 66 and could be occupied by buildings, tanks or other obstructions which at least partially block movement of portions of the irrigation system, although no such obstructions are shown.

Initially, the components of the center pivot irrigation system 10 must be selected to fit the field 58. To do so, the boundaries of the field 58 are first determined as shown in step 502 of Fig. 5. In one embodiment, this is done by determining the geographic coordinates of the corners 60-66 and other key boundary points of the field 58 with a GPS receiver or other device. Alternately, a map of the field 58 may be obtained from a database of existing imagery to determine the outline of the field. The field boundaries and/or map are then entered into a Lindsay Manufacturing Smart Design program or similar program to create a custom irrigation design program for the field 58. The custom irrigation design program permits selection of the proper size and components of the center pivot irrigation system 10 to effectively fit the field 58 as depicted in step 504.

As shown in Figs. 1 and 2, once installed, the center pivot irrigation system 10 pivots about its central pivot 12 to irrigate the field 58 in a generally circular pattern, save for the area occupied by any obstructions. When all of the spans of the main boom assembly 14 are fully extended and in a generally straight line, the end tower 26 travels along a generally circular path 68 shown by the dashed lines. In step 506, points or positions along this path 68 are determined and saved in the memory 52 or other memory accessible by the extension arm control system 44.

In step 508, the same design program or other program may be used to determine the precise locations at which the extension arm 16 should be extended, and the amount it should be extended, to properly irrigate the corner areas 60-66. The positioning of the extension arm 16 to irrigate the corners may take into account numerous factors including the field boundaries and/or obstacles, the current position of the end tower 26 along the path 68, the pivot angle of the end tower, an extension ratio of the extension arm, and/or the horizontal distance of the end tower from the center pivot (the end tower may be on a hill or in a valley). The locations at which the extension arm 16 should be extended and the amount it should be extended are then saved in the memory 52 or other memory accessible by the extension arm control system 44.

In one embodiment, a look-up table such as the one shown in Fig 4 is created in steps 506 and 508 and stored in the memory 52 so it can be accessed by the computing device 50. As shown, the look-up table lists a number of positions of the end tower 26 along its circular irrigation path 68. In one embodiment, the positions of the end tower are represented by an angle ∝ formed between the longitudinal axis of the main boom assembly 14 and a vertical axis line 56 passing through the center of the fixed central pivot 12. For example, the first line in the look-up table shows an angle of 0°, which indicates that the main boom assembly is pointing straight up when viewed from the perspective of Fig. 1 or 2. Any number of positions of the end tower along its path 68 may be stored in the look-up table, but for conciseness, the look-up table in Fig. 4 only includes positions at 5° intervals for one quadrant of the field.

The look-up table also lists a desired position of the extension arm 16 for each of the positions of the end tower 26. In one embodiment, the positions of the extension arm 16 are represented by an angle β formed between the extension arm 16 and the main boom assembly 14. For example, the first line in the look-up table shows an angle β of 90°, which indicates that the extension arm 16 is folded in and generally perpendicular to the main boom assembly 14 when the main boom assembly is aligned with the axis line 56.

The positions of the end tower 26 and extension arm 16 may also be represented in the look-up table by geographic coordinates, distances or angles from other objects, or by other ways. Moreover, the data representative of the positions or angular orientations of the end tower 26 and extension arm 16 may be stored in the memory 52 or elsewhere in something other than a look-up table. It is important, however, that the desired positions or angular orientations of the extension arm 16 be associated in some way with particular positions or angular orientations of the end tower.

After the custom irrigation design program has been created to determine where irrigation, chemigation, or fertigation should occur, the control program is uploaded to the main control system 42. Likewise, the look-up table depicted in Fig. 4 is uploaded to the memory 52 of the extension arm control system 44. While the irrigation system 10 is in operation, the main control system 42 determines the current position of the main boom assembly 14 and determines when to control relays connected to the various water-emitting devices in accordance with the custom irrigation design program. Similarly, the extension arm control system 44 determines the proper positioning of the extension arm to maximize irrigation in the corners 60-66 of the field. As discussed above, in some embodiments the extension arm control system 44 is a part of the main control system 42, so the main control program and look-up table may be uploaded to the same memory for access by the same computing device.

Returning to Fig. 5, the extension arm control system 44 determines the proper positioning of the extension arm 16 by first determining an actual position of the end tower 26 in the field 58 while the center pivot irrigation system 10 is in operation as depicted in step 510. This may be done with the location determining device 46. The extension arm control system 44 simultaneously determines an actual position of the extension arm 16 as depicted in step 512. This may be done with the location determining component 48. The extension arm control system 44 then accesses the memory 52 in step 514 and determines a desired position of the extension arm 16 for the actual position of the end tower determined in step 510. For example, if the main boom assembly is at an angle ∝ of approximately 55° as shown in Fig. 1, the computing device accesses the look-up table and determines that the desired position of the extension arm associated with an angle ∝ of 55° is an angle β of approximately 160°. As another example, if the main boom assembly is at an angle ∝ of 90° as shown in Fig. 2, the computing device accesses the look-up table and determines that the desired position of the extension arm associated with an angle ∝ of 90° is an angle β of 90°.

The computing device 50 then compares the actual position of the extension arm determined in step 512 to the desired position of the extension arm determined in step 516. If the actual position of the extension arm deviates from the desired position of the extension arm by more than a threshold amount, the extension arm control system calculates a steering correction amount as shown in step 518 and then directs a steering mechanism on the extension arm to steer the extension arm toward the desired position of the extension arm as depicted in step 520. The method then returns to steps 510-520 to again determine the actual positions of the end tower 26 and extension arm 16 and to steer the extension arm 16 as required.

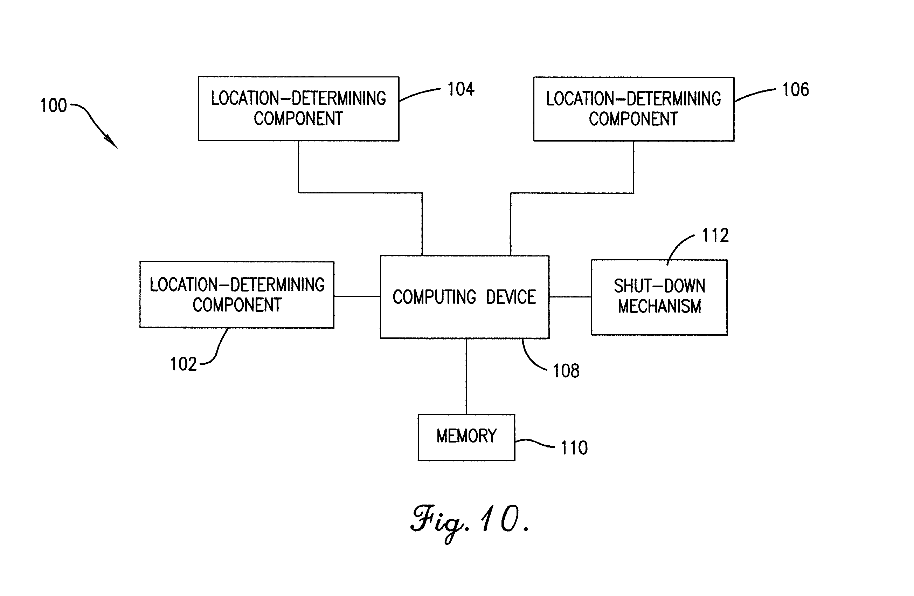

Embodiments ofthe present invention may also include an independent safety monitor 100 illustrated in Fig. 10 for monitoring the position and/or orientation of the irrigation system 10 or another irrigation system and for partially or wholly shutting down the irrigation system if it drifts off course and/or becomes misaligned. The safety monitor 100 may be used with the exemplary center pivot irrigation system 10 described above, a lateral irrigation system, or any other irrigation system with one or more mobile towers.

The safety monitor 100 can be implemented with hardware, software, firmware, or a combination thereof, and in one embodiment comprises a location determining component 102, a location determining component 104, a location determining component 106, a computing device 108, memory 110, and a shut-down mechanism 112. In some embodiments, the functionality of the safety monitor 100 may be performed by the extension arm control system 44 or the main control system 42 so that the safety monitor control features of the present invention can be implemented without dedicated electronics. However, in preferred forms, the safety monitor 100, or at least the computing device 108, is a stand-alone device so as to provide independent safety monitoring of the irrigation system.

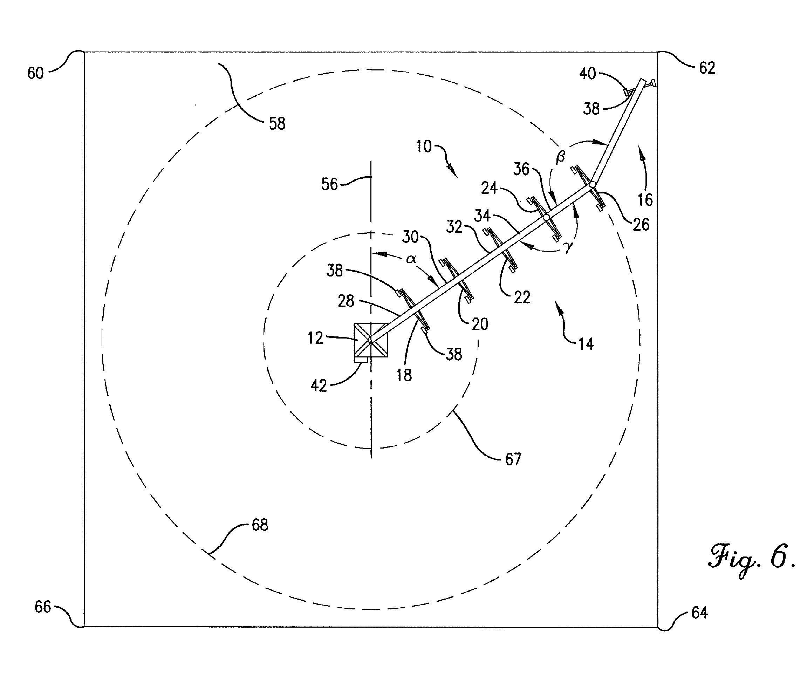

The location determining component 102 provides, in a substantially conventional manner, location or positional information for the main section of the irrigation system except the end tower 26. The location determining component may be, for example, an angle encoder positioned between the fixed center pivot 12 and the main boom assembly 14 for sensing an angle ∝ between the main boom assembly and an axis line 56 as shown in Fig. 6. In some embodiments, the angle encoder is incorporated in an existing articulating joint positioned between the center pivot 12 and the first span of the main boom assembly 14 so that the safety monitor does not require its own dedicated angle encoder.

The location determining component 102 may alternatively be a GPS receiver attached to or near one of the mobile towers except the end tower 26 and operable to receive navigational signals from GPS satellites to calculate a position of the mobile tower as a function of the signals. The GPS receiver may include one or more processors, controllers, or other computing devices and memory for storing information accessed and/or generated by the processors or other computing devices. In some embodiments, the GPS receiver is the same GPS receiver that is used by the main control system 42 to control the positioning and/or operation of the main boom assembly so that the safety monitor does not require its own dedicated GPS receiver. The GPS receiver may be coupled with a GPS patch antenna, helical antenna, or any other type of antenna mounted on or near the end tower.

The location determining component 104 provides, in a substantially conventional manner, location or positional information for the end tower 26. The location determining component 104 may be, for example, an angle encoder positioned between mobile tower 24 and the end tower 26 for sensing an angle γ between the main boom assembly and the end tower 26 as shown in Fig. 6. In some embodiments, the angle encoder is incorporated in an existing articulating joint positioned between the mobile tower 24 and the end tower 26 so that the safety monitor 100 does not require its own dedicated angle encoder.

The location determining component 104 may also be a GPS receiver attached to or near the end tower 26 and operable to receive navigational signals from GPS satellites to calculate a position of the end tower 26 as a function of the signals.

The location determining component 106 provides, in a substantially conventional manner, location or positional information for the extension arm 16. In one embodiment, the location determining component 106 is an angle encoder coupled between the extension arm 16 and the end tower 26. The location determining component 106 may also be any other device capable of measuring or otherwise determining the angular orientation of the extension arm 16 relative to the end tower 26. In some embodiments, the angle encoder or other angle measuring device is part of an existing articulating pivot joint on the irrigation system so that the safety monitor does not require a dedicated angle encoder. In other embodiments, the location determining component 106 may be a GPS receiver mounted to the swing tower 38 of the extension arm 16.

The computing device 108 receives data from the location determining components 102,104,106, monitors the position or orientation of the corresponding sections of the irrigation system, and partially or wholly shuts down the irrigation system if it drifts off course or becomes misaligned as discussed in more detail below. The computing device 108 may include any number of processors, controllers, ASICs, or other control circuitry. As mentioned above, the computing device 108 may be part of the main control system 42 or the extension arm control system so that separate dedicated electronic circuitry is not required for the safety monitor, but the computing device 108 is preferably an independent device.

A computer program that may be implemented by the computing device 108 may perform some of the control functions described herein. The computer program preferably comprises an ordered listing of executable instructions for implementing logical functions in the computing device. The computer program can be embodied in any computer-readable medium as described above.

The memory 110 may be any electronic memory that can be accessed by the computing device 108 and operable for storing instructions or data. In accordance with one important aspect of the invention, the memory 110 may store data representative of a plurality of positions of the main boom, the end tower 26, and the extension arm 16 along a generally circular or semi-circular path of travel. The data may be in various forms and gathered in various manners, examples of which are described in more detail below.

The shut down mechanism 112 is conventional and may include any set of relays, control circuitry, etc. operable to receive instructions or signals from the computing device 108 and to partially or wholly shut down the irrigation system in response to these instructions. For example, the shut down mechanism 112 may include relays or switches connected to the drive motors of each of the mobile towers of the irrigation system.

The safety monitor 100 may also include a power source such as a battery pack or solar cell, or it may be hardwired to a power source associated with other components of the center pivot irrigation system. The safety monitor 100 may also include a display, a cellular or other radio transceiver for wirelessly receiving and transmitting data from and to remote devices, and/or other components.

The components shown in Fig. 10 and described above need not be physically connected to one another since wireless communication among the various depicted components is permissible and intended to fall within the scope of the present invention. Some or all of the components of the safety monitor 100 may be enclosed in or supported on a weatherproof housing for protection from moisture, vibration, and impact. The housing may be constructed from a suitable vibration- and impact-resistant material such as, for example, plastic, nylon, aluminum, or any combination thereof and may include one or more appropriate gaskets or seals to make it substantially waterproof or resistant. The housing may include a location for a battery, or other power source.

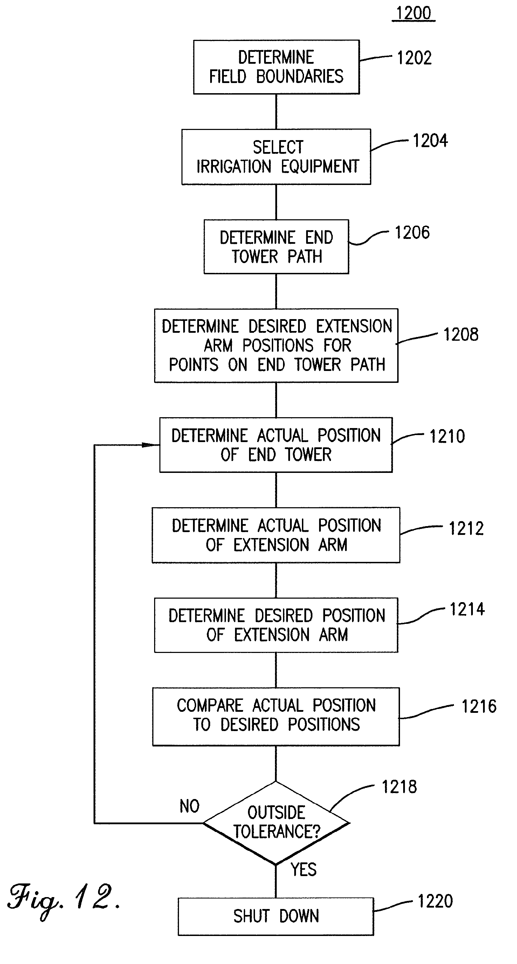

The flow chart of Fig. 12 depicts exemplary steps in a method 1200 of selecting, setting-up, and operating the center pivot irrigation system 10, a lateral move irrigation system, or any other irrigation system with mobile towers. Some of the blocks of the flow chart may represent a module segment or portion of code of the computer programs of the present invention which comprise one or more executable instructions for implementing the specified logical function or functions. In some alternative implementations, the functions noted in the various blocks may occur out of the order depicted in Fig. 12. For example, two blocks shown in succession in Fig. 12 may in fact be executed substantially concurrently, or the blocks may sometimes be executed in the reverse order depending upon the functionality involved.

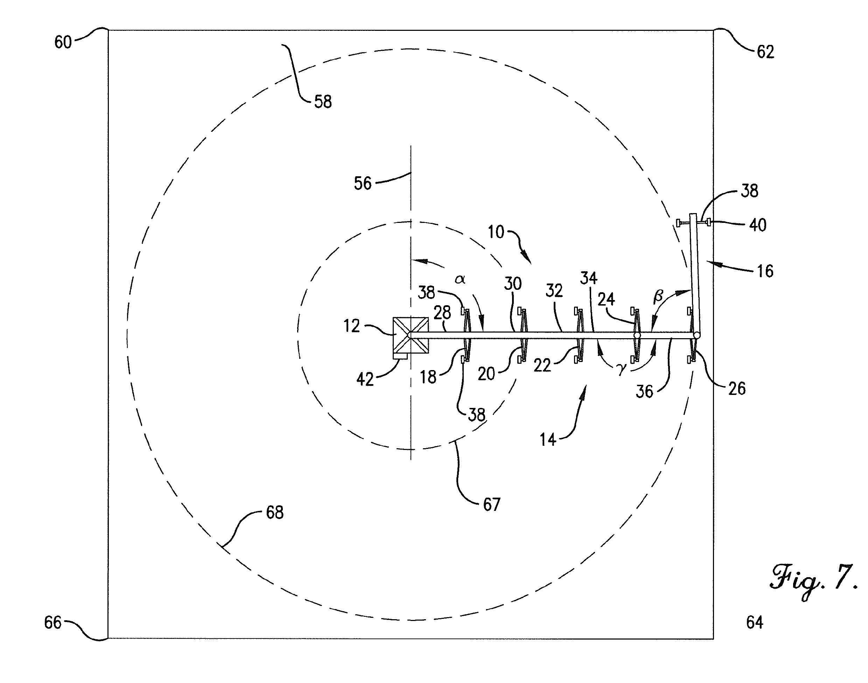

Figs. 6 and 7 illustrate an exemplary field 58 in which the irrigation system 10 may be used. Figs. 6 and 7 are identical to Figs. 1 and 2 except that an additional path 67 and a third angle γ are shown. The illustrated field is rectangular, but the principles of the present invention work equally well with any sized and shaped field or other area to be irrigated. The illustrated field has four corners 60, 62, 64, 66 and could be occupied by buildings, tanks or other obstructions which at least partially block movement of portions of the irrigation system, although no such obstructions are shown.

Initially, the components of the irrigation system 10 must be selected to fit the field 58. To do so, the boundaries of the field 58 are first determined as shown in step 1202. This is done in the same manner as described above in connection with step 502 of method 500. A custom irrigation design program may then be used to select the proper size and components of the irrigation system 10 to effectively fit the field 58 as depicted in step 1204 and as described above.

As shown in Figs. 6 and 7, the center pivot irrigation system 10 pivots about its central pivot 12 to irrigate the field 58 in a generally circular pattern, save for the area occupied by any obstructions. When all of the spans of the main boom assembly 14 are fully extended and in a generally straight line, one of the towers of the main section, such as tower 20, travels along a generally circular path 67 shown in dashed lines. Likewise, the end tower 26 travels along a generally circular path 68 shown in dashed lines. In step 1206, points or positions along these paths 67, 68 are determined and saved in the memory 52 or other memory accessible by the extension arm control system 44.

In step 1208, the design program described above or other program may be used to determine the precise locations at which the extension arm 16 should be extended, and the amount it should be extended, to properly irrigate the corner areas 60-66. The positioning of the extension arm 16 to irrigate the corners may take into account numerous factors including the field boundaries and/or obstacles, the current position of the end tower 26 along the path 68, the pivot angle of the end tower, an extension ratio of the extension arm, and/or the horizontal distance of the end tower from the center pivot (the end tower may be on a hill or in a valley). The locations at which the extension arm 16 should be extended and the amount it should be extended are then saved in the memory 110 or other memory accessible by the safety monitor 100.

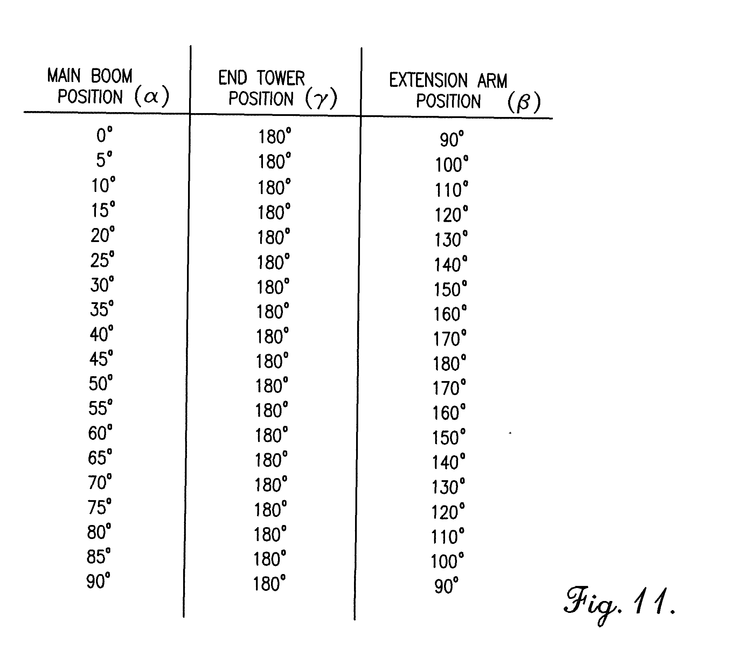

In one embodiment, a look-up table such as the one shown in Fig 11 is created in steps 1206 and 1208 and stored in the memory 110 so it can be accessed by the computing device 108. The first column of the look-up table lists a number of angular positions of the tower 20 along its circular path 67 or the positions of other portions of the main boom section. The second column lists a number of desired angular positions of the end tower 26 relative to the tower 20 or other portion of the main boom. In one embodiment, the positions of the tower 20 or other portion of the main boom are represented by an angle ∝ formed between the longitudinal axis of the main boom assembly 14 and a vertical axis line 56 passing through the center of the fixed central pivot 12. For example, the first line in the look-up table shows an angle of 0°, which indicates that the main boom assembly is pointing straight up when viewed from the perspective of Fig. 1 or 2. The positions of the end tower 26 in the second column may be represented by angle γ formed between the end tower 26 and one of the other towers such as tower 24. For example, the first line in the table shows an angle γ of 180°, which indicates the end tower is in alignment with the rest of the maim boom. All the entries for γ in the exemplary table of Fig. 11 are 180°, but other angles may be entered when the irrigation system is used in a field that requires the end tower 26 to be folded in relative to the other mobile towers.

The third column of the look-up table lists a desired position of the extension arm 16 for each of the positions of the end tower 26. In one embodiment, the positions of the extension arm 16 are represented by an angle β formed between the extension arm 16 and the end tower. For example, the first line in the look-up table shows an angle β of 90°, which indicates that the extension arm 16 is folded in and generally perpendicular to the end tower 26 when the main boom assembly is aligned with the axis line 56. Any number of positions may be stored in the look-up table, but for conciseness, the look-up table in Fig. 4 only includes positions at 5° intervals for one quadrant of the field.

The positions of the tower 20 or other portion of the main boom, the end tower 26, and the extension arm 16 may also be represented in the look-up table by geographic coordinates, distances or angles from other objects, or by other ways. Moreover, the data representative of the positions or angular orientations of the main boom, end tower 26, and extension arm 16 may be stored in the memory 110 or elsewhere in something other than a look-up table. It is important, however, that the desired positions or angular orientations of the extension arm 16 be associated in some way with particular positions or angular orientations of the end tower.

After the custom irrigation design program has been created to determine where irrigation, chemigation, or fertigation should occur, the control program is uploaded to the main control system 42 as described above. Likewise, the look-up table depicted in Fig. 11 is uploaded to the memory 110 of the safety monitor 100.

While the irrigation system 10 is in operation, the main control system 42 determines the current position of the main boom assembly 14 and determines when to control relays connected to the various water-emitting devices in accordance with the custom irrigation design program. Similarly, the extension arm control system 44 determines the proper positioning of the extension arm to maximize irrigation in the corners 60-66 of the field. Finally, the safety monitor 100 assures that the irrigation system is properly positioned and/or aligned.

Returning to Fig. 12, the extension arm control system 44 determines the proper positioning of the extension arm 16 as depicted in step 1210 and as described above. The extension arm control system simultaneously determines an actual position of the extension arm 16 as depicted in step 1212 and as described above. The extension arm control system then accesses and determines a desired position of the extension arm 16 for the actual position of the end tower as shown in step 1214 and as described above. For example, if the main boom assembly is at an angle ∝ of approximately 55° as shown in Fig. 6, the computing device accesses the look-up table and determines that the desired position of the extension arm associated with an angle ∝ of 55° is an angle β of approximately 160°.

The computing device 108 of the safety monitor 100 then compares the actual position of the extension arm to the desired position of the extension arm in step 1216. If the actual position of the extension arm deviates from the desired position of the extension arm by more than a threshold amount, the safety monitor shuts down the irrigation system as depicted in steps 1218 and 1220. The threshold amount considered by the safety monitor 100 is greater than the threshold amount considered by the extension arm control system when steering the irrigation system. This permits the extension arm control system 44 to steer the mobile towers and extension arm to keep them on course and in general alignment, and permits the safety monitor 100 to independently monitor and shut-down the machine if the extension arm control system fails to properly maintain the position and/or orientation of the irrigation system. In one embodiment, the threshold amount considered by the safety monitor is 10% and the threshold amount considered by the extension arm control system is 5%.

The computing device 108 of the safety monitor 100 may also compare the actual position of the end tower 26 to the desired position of the end tower in step 1216. If the actual position of the end tower deviates from the desired position of the end tower by more than a threshold amount, the safety monitor shuts down the irrigation system as depicted in steps 1218 and 1220. Again, the threshold amount considered by the safety monitor is greater than the threshold amount considered by the extension arm control system when steering the irrigation system and may be 10%.

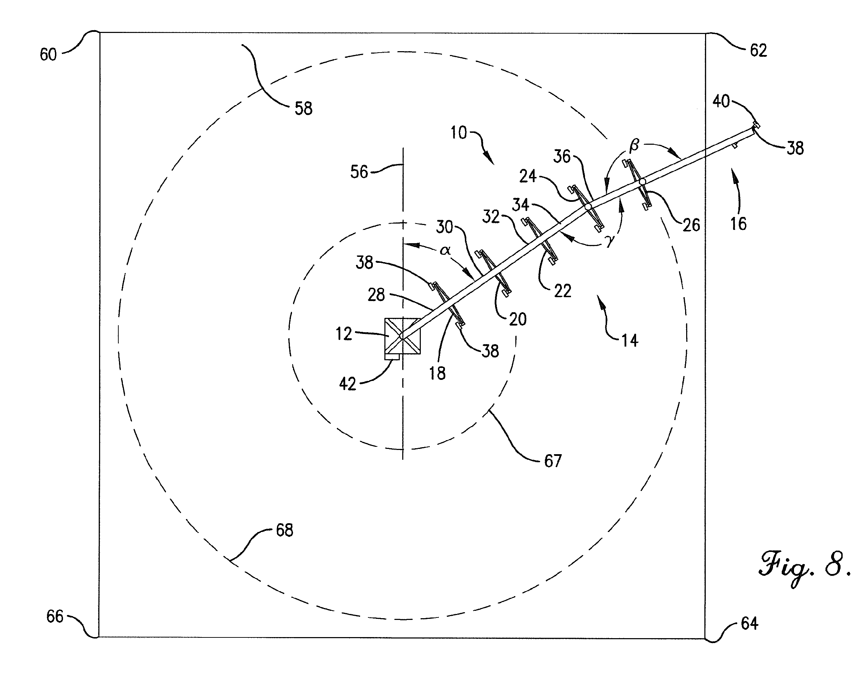

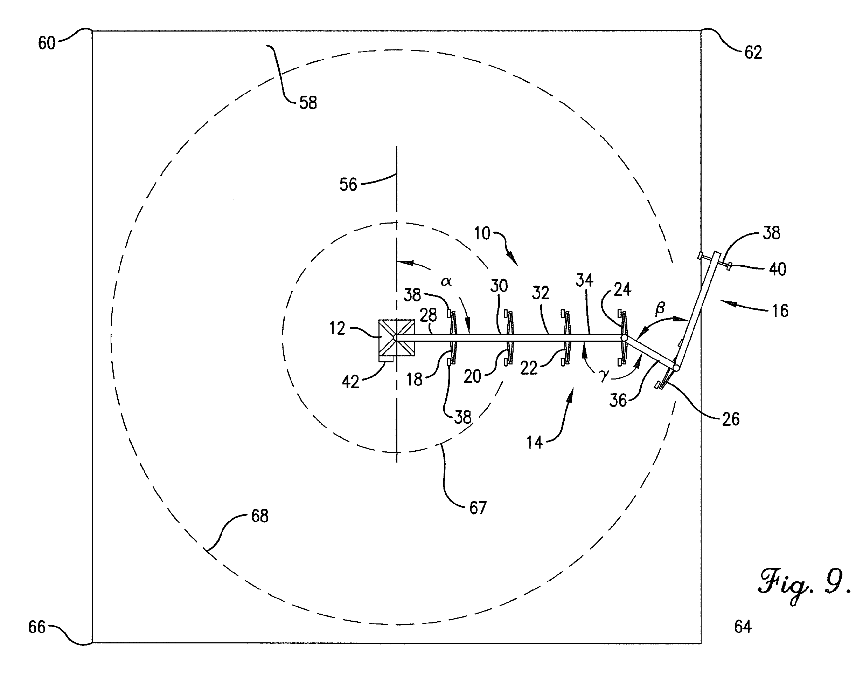

Fig. 8 illustrates the irrigation system with an undesired position or orientation of the extension arm 16. In this example, the safety monitor 100 has shut-down the irrigation system. Fig. 9 illustrates the irrigation system with undesired positions of both the extension arm 16 and the end tower 26. Again, in this example, the safety monitor 100 has shut-down the irrigation system.

Although the invention has been described with reference to the preferred embodiment illustrated in the attached drawing figures, it is noted that equivalents may be employed and substitutions made herein without departing from the scope of the invention as recited in the claims For example, those skilled in the art will appreciate that the irrigation system 10 may include any number of spans and mobile towers. It will also be recognized that the principles of the present invention are not limited to use with a center pivot system but may also be employed with other types of irrigation systems, including for example, lateral move systems and other types which do not employ a fixed center pivot tower.

Having thus described the preferred embodiment of the invention, what is claimed as new and desired to be protected by Letters Patent includes the following:

## Claims

1. A method of operating an irrigation system having a main boom assembly with an end tower and an extension arm pivotally supported to the end tower, the method comprising:
determining desired positions for the extension arm for positions of the end tower in a field to be irrigated;
storing in memory and associating data representative of the desired positions for the extension arm and data representative of the positions of the end tower;
determining an actual position of the end tower in the field while the center pivot irrigation system is in operation;
determining an actual position of the extension arm while the center pivot irrigation system is in operation;
accessing the memory and determining a desired position of the extension arm for the actual position of the end tower;
comparing the actual position of the extension arm to the desired position of the extension arm; and
if the actual position of the extension arm deviates from the desired position of the extension arm by more than a threshold amount, partially or wholly shutting down the irrigation system.

2. The method as set forth in claim 1, wherein the data representative of the desired positions of the extension arm and the data representative of the positions of the end tower are stored in a look-up table or non-volatile memory, where each of the desired positions of the extension arm is associated with one of the positions of the end tower.

3. The method as set forth in claim 1, wherein the positions of the end tower in the field stored in the memory are represented as angular orientations of the main boom assembly relative to an axis of a center pivot.

4. The method as set forth in claim 1, wherein the actual position of the end tower in the field is determined with a GPS receiver coupled with the end tower.

5. The method as set forth in claim 3, wherein the actual position of the end tower in the field is determined with an angle encoder positioned between the center pivot and the main boom assembly and is represented by an angular orientation of the main boom assembly relative to the axis of the center pivot.

6. The method as set forth in claim 1, wherein the desired positions for the extension arm are represented by angular orientations of the extension arm relative to the end tower.

7. The method as set forth in claim 6, wherein the actual position of the extension arm is determined with an angular encoder positioned between the extension arm and the end tower or a GPS receiver and is represented by an angular orientation of the extension arm relative to the end tower.

8. A method of operating a center pivot irrigation system having a main boom assembly with an end tower and an extension arm pivotally supported to the end tower, the method comprising:
determining at least some boundaries of a field to be irrigated with the center pivot irrigation system;
determining a plurality of positions for the end tower along a path in the field;
determining a desired angular orientation of the extension arm relative to the end tower for each of the positions of the end tower along the path based at least partially on the boundaries;
storing in memory a look-up table having data representative of the desired angular orientations of the extension arm associated with data representative of the positions of the end tower along the path;
determining an actual position of the end tower in the field while the center pivot irrigation system is in operation with a global positioning satellite receiver;
determining an actual angular orientation of the extension arm relative to the end tower while the center pivot irrigation system is in operation;
accessing the memory and determining the desired angular orientation of the extension arm for the actual position of the end tower;
comparing the actual angular orientation of the extension arm to the desired angular orientation; and
if the actual angular orientation of the extension arm deviates from the desired angular orientation by more than a threshold amount, partially or wholly shutting down the irrigation system.

9. The method as set forth in claim 8, wherein the actual position of the extension arm is determined with an angular encoder positioned between the extension arm and the end tower and is indicated by an angular orientation of the extension arm relative to the end tower.

10. An irrigation system comprising:
a stationary center pivot connected to a source of fluid;
a main boom assembly pivotally connected to the center pivot, the main boom assembly having a plurality of boom sections supported by moveable towers, the moveable tower furthest from the center pivot being an end tower;
an extension arm pivotally supported to the end tower;
a location-determining component for determining a current location of the end tower;
an angular measurement device coupled between the extension arm and the end tower for measuring an angular orientation of the extension arm relative to the end tower; and
a controller coupled with the location-determining component and the angular measurement device, the controller being operable to-
receive from the location-determining component an actual position of the end tower in the field while the center pivot irrigation system is in operation;
receive from the angular measurement device an actual angular orientation of the extension arm relative to the end tower while the center pivot irrigation system is in operation;
access memory in which is stored a desired angular orientation for the extension arm for each position of the end tower in the field based at least partially on the boundaries of the field;
select from the memory a desired angular orientation of the extension arm based on the actual position of the end tower;
compare the actual angular orientation of the extension arm to the desired angular orientation of the extension arm; and
if the actual angular orientation of the extension arm deviates from the desired angular orientation of the extension arm by more than a threshold amount, partially or wholly shutting down the irrigation system.

11. The irrigation system as set forth in claim 10, wherein the location-determining component is a GPS receiver operable for receiving satellite signals from a plurality of GPS satellites and for determining a current location of the end tower as a function of the received satellite signals.

12. The irrigation system as set forth in claim 10, the main boom assembly further comprising-
a fluid distribution conduit coupled to the source of fluid; and
a plurality of water-emitting devices supported along the fluid distribution conduit for delivering fluids from the conduit to crops beneath the irrigation system.

13. The irrigation system as set forth in claim 10, wherein the source of fluid is a water well.

14. The irrigation system as set forth in claim 10, wherein the controller is part of a main control system for controlling operation of the water-emitting devices.

15. The irrigation system as set forth in claim 11 wherein the GPS receiver is also used for controlling positioning of the main boom assembly.
